Europäisches Patentamt

(19) **European Patent Office**

**Office européen des brevets**

(11) Numéro de publication: **0 267 937**
**B1**

(12) **FASCICULE DE BREVET EUROPÉEN**

(45) Date de publication du fascicule du brevet:
28.02.90

(51) Int. Cl. ⁵: **B 31 B   1/86, B 29 C  65/74**

(21) Numéro de dépôt: 87903340.5

(22) Date de dépôt: 20.05.87

(86) Numéro de dépôt international:
PCT/FR 87/00174

(87) Numéro de publication international:
WO 87/07212 (03.12.87 Gazette 87/27)

(54) DISPOSITIF DE SOUDAGE ET DE PERFORATION D'UN FILM THERMOPLASTIQUE REPLIE SUR LUI-MEME.

(30) Priorité: 21.05.86 FR 8607210

(43) Date de publication de la demande:
25.05.88 Bulletin 88/21

(45) Mention de la délivrance du brevet:
28.02.90 Bulletin 90/09

(84) Etats contractants désignés:
AT BE CH DE GB IT LI LU NL SE

(56) Documents cité:
DE-A-1 511 036
DE-A-2 115 161
DE-U-1 673 783
FR-A-895 084
FR-A-2 076 245
FR-A-2 291 010
FR-A-2 359 759
FR-A-2 394 461
US-A-2 606 987
US-A-3 183 750
US-A-3 367 261
US-A-3 982 991

(73) Titulaire: BAXTER INTERNATIONAL INC. (a Delaware corporation)
One Baxter Parkway
Deerfield Illinois 60015 (US)

(72) Inventeur: SUSINI, Etienne
8, chemin de la Vallée
F-94440 Villecresnes (FR)
Inventeur: SOUBRIER, Pierre
62, boulevard Louis Schmidt
B-1040 Bruxelles (BE)

(74) Mandataire: Fruchard, Guy
CABINET BOETTCHER 23, rue la Boétie
F-75008 Paris (FR)

EP 0 267 937 B1

## Description

La présente invention concerne un dispositif de soudage et de perforation d'un film thermoplastique replié sur lui-même; L'invention s'applique notamment, bien que non exclusivement, à la réalisation de poches de perfusion.

On connaît des machines pour la réalisation de poches à partir d'un film souple en matière plastique. En particulier, on connaît des machines pour la réalisation de poches à partir d'un film thermoplastique selon le préambule de la revendication 1. Ces machines comprennent une série de postes où le film est traité de façon successive. En général, le film est déroulé à partir d'un bobinoir, puis perforé. Au droit des perforations, des embouts sont soudés par une tête de soudage puis le film est conformé dans un conformateur principalement destiné à replier le film sur lui-même en vue d'effectuer une soudure bord à bord. Le film ainsi soudé bord à bord forme un tube qui est ensuite soudé transversalement à intervalles réguliers afin de réaliser des poches individuelles, ces poches individuelles étant remplies préalablement à la réalisation de la fermeture de la poche.

La présente invention concerne plus particulièrement le dispositif destiné à réaliser la soudure bord à bord du film replié sur lui-même.

On connaît des dispositifs permettant d'effectuer une soudure parallèle au bord ou même deux soudures parallèles au bord et espacées l'une de l'autre afin de délimiter une languette dans laquelle une perforation peut être effectuée pour réaliser une ouverture d'accrochage de la poche (FR-A-2 394 461). La ou les soudures sont généralement effectuées au moyen d'un ruban de soudure comportant une partie chauffante, le film soudé se refroidissant naturellement à la sortie du poste de soudage. Une telle structure présente des inconvénients en particulier dans les machines de cadence élevée où les rubans de chauffage doivent être portés à une température élevée pour effectuer une soudure rapide. Il existe en effet dans ce cas un risque que les efforts exercés sur le film à sa sortie du poste de soudage provoquent une séparation, au moins partielle, des parties de films associées de sorte que la soudure n'est plus étanche ou en tout cas trop fragile.

Un but de la présente invention est de proposer un dispositif de soudage et de perforation d'un film thermoplastique replié sur lui-même qui permette la réalisation d'une poche améliorée ne présentant pas les inconvénients précités.

En vue de la réalisation de ce but, on prévoit, selon l'invention, un dispositif de soudage et de perforation d'un film thermoplastique replié sur lui-même, entraîné pas à pas, comportant un support mobile transversalement au film et des moyens chauffants portés par le support mobile, ces moyens chauffants comprenant deux rubans de soudage conducteurs de l'électricité espacés l'un de l'autre et comportant chacun une partie chauffante par passage d'un courant électrique, et des moyens de perforation disposés entre les rubans de soudage, dans lequel les rubans de soudage comportent une partie non chauffante de longueur au moins égale à la partie chauffante et disposée en aval de la partie chauffante selon une direction de déplacement du film.

Ainsi, lors de l'avance pas à pas du film, les soudures des bords du film sont successivement réalisées par la partie chauffante des rubans de soudage puis refroidies et aplaties par la partie non chauffante des rubans de soudage, ce qui évite une déformation ultérieure du film soudé.

Selon une version avantageuse de l'invention, les moyens de perforation sont montés sur un socle qui est mobile parallèlement à une direction longitudinale des rubans de soudage. Ainsi, on règle à volonté la position de l'ouverture d'accrochage. En particulier, lorsque la machine est utilisée pour réaliser des poches de différentes largeurs, il est possible de disposer les moyens de perforation pour que l'ouverture d'accrochage soit systématiquement réalisée au milieu de la largeur de la poche.

Selon un autre aspect avantageux de l'invention, les moyens de perforation comprennent un ruban de perforation chauffant par passage d'un courant électrique et présentant une nervure longitudinale tournée vers le film. Ainsi, lors de l'application du dispositif de soudage et de perforation du film, la nervure longitudinale réalise une fente d'accrochage tandis que les parties latérales du ruban réalisent une soudure de part et d'autre de la fente d'accrochage. On améliore ainsi encore la résistance au déchirement de l'ouverture d'accrochage et on supprime le risque d'introduction d'éléments polluants entre les deux épaisseurs de film au niveau de l'ouverture d'accrochage.

Selon un mode de réalisation avantageux de l'invention, le ruban de perforation comporte des extrémités repliées engagées dans une première extrémité de tiges de liaison tubulaires et soudées à celles-ci, les tiges de liaison tubulaires ayant une seconde extrémité équipée d'un insert soudé. Ainsi on assure une bonne liaison, tant mécanique qu'électrique, entre le ruban de perforation et les tiges de liaison servant à l'alimentation électrique du ruban de perforation.

D'autres caractéristiques et avantages de l'invention ressortiront encore de la description détaillée d'un mode de réalisation préféré de l'invention en liaison avec les dessins ci-joints parmi lesquels:

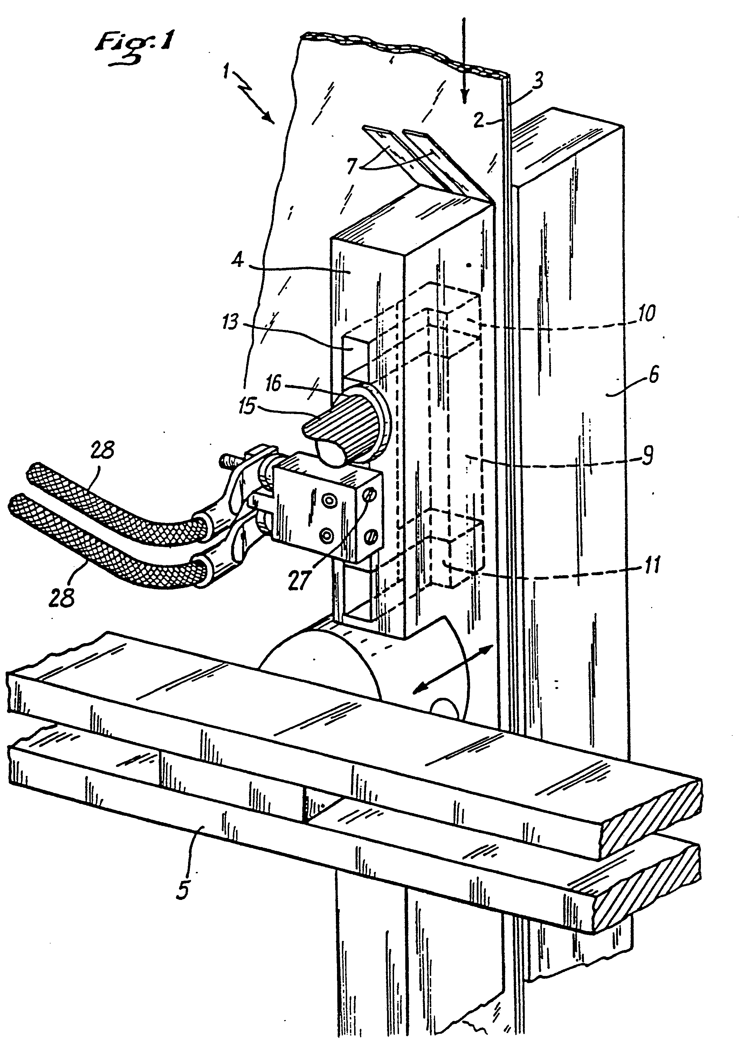

- la figure 1 est une vue en perspective du dispositif de soudage et de perforation mis en place en regard d'un film,

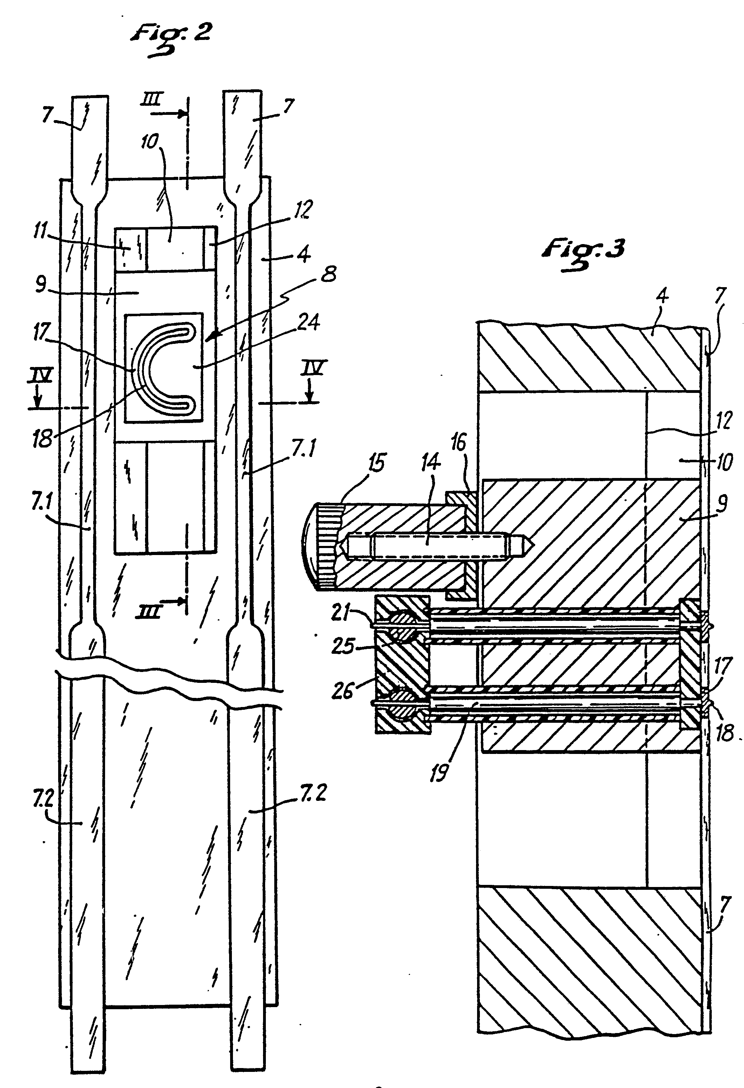

- la figure 2 est une vue en élévation partiellement interrompue du dispositif de soudage et de perforation selon l'invention,
- la figure 3 est une vue en coupe partielle selon la ligne III - III de la figure 2,
- la figure 4 est une vue en coupe selon la ligne IV - IV de la figure 2,

la figure 5 est une vue en perspective agrandie du ruban de perforation,

la figure 6 est une vue en coupe encore agrandie selon la ligne VI - VI de la figure 5,

la figure 7 est une vue en plan du film à sa sortie du dispositif de soudage et de perforation selon l'invention.

En référence aux figures, le dispositif selon l'invention est destiné à assurer le soudage bord à bord et la perforation d'un film thermoplastique 1 replié sur lui-même selon deux épaisseurs 2 et 3. Le dispositif comporte un support 4 mobile transversalement au film 1 et dont les déplacements sont assurés par une barre d'actionnement 5 elle-même reliée à des moyens d'actionnement non représentés, par exemple un vérin pneumatique. De préférence, te dispositif comporte également une contreplaque 6 disposée en regard du support mobile 4 et servant d'appui pour le film 1 lorsque le support mobile 4 est appliqué contre le film 1 par la barre d'actionnement 5. Le support mobile 4 comporte, sur sa face tournée vers le film, des moyens chauffants formés par deux rubans de soudage conducteurs de l'électricité 7 espacés l'un de l'autre et comportant chacun une partie de largeur rétrécie 7.1 ayant une résistance électrique suffisante pour former une partie chauffante par passage d'un courant électrique. En aval des parties chauffantes 7.1 selon le sens de déplacement du film thermoplastique 1, chaque ruban de soudage 7 comporte une partie non chauffante 7.2, par exemple une partie de ruban ayant une largeur suffisante pour avoir une faible résistance électrique, de longueur au moins égale à la partie chauffante 7.1. Les rubans chauffants 7 sont disposés sur la face du support mobile 4 qui est tournée vers le film thermoplastique 1 et dépassent aux extrémités du support mobile afin de permettre leur raccordement à une source d'électricité non représentée.

Des moyens de perforation généralement désignés en 8 sont portés par le support mobile 4 entre les parties chauffantes 7.1 des rubans de soudage 7.

Selon le mode de réalisation préféré illustré, les moyens de perforation 8 sont montés sur un socle 9 qui est mobile parallèlement à la direction longitudinale des rubans de soudage 7. Plus précisément, le socle mobile 9 est disposé dans une ouverture 10 réalisée entre les rubans de soudage 7 et comportant des épaulements 11 et 12 sur lesquels prennent appui des épaulements correspondants du socle mobile 9. A la partie arrière du support mobile 4, l'ouverture 10 débouche selon une fente 13 dans laquelle passe une tige filetée 14 vissée à une de ses extrémités dans le socle mobile 9 et dont l'autre extrémité est reliée à un bouton molleté 15 prenant appui sur les bords de la fente 13 par l'intermédiaire d'une rondelle en matière plastique 16. Ainsi, lors du serrage du bouton molleté 15 le socle mobile 9 est bloqué en appui contre les épaulements 11 et 12, tandis que lors du desserrage du bouton molleté 15, le socle mobile 9 est libre de se déplacer dans l'ouverture 10 parallèlement aux rubans de soudage 7.

Les moyens de perforation comprennent un ruban de perforation 17 chauffant par passage d'un courant électrique et présentant une nervure longitudinale 18 tournée vers le film. De préférence, le ruban de perforation 17 est un ruban profilé recourbé en forme de C et dont les extrémités sont repliées perpendiculairement au plan du ruban et engagées dans une première extrémité de tiges de liaison tubulaires 19 à laquelle elles sont soudées par une soudure 20. La seconde extrémité de chaque tige de liaison 19 est équipée d'un insert 21 soudé dans la tige de liaison.

Pour recevoir les moyens de perforation, le socle 9 comporte des alésages 22 dans lesquels sont disposés des tubes électriquement isolants 23. Lorsque les tiges de liaison 19 sont engagées dans les tubes isolants 23, le ruban de perforation 17 s'appuie contre une plaque électriquement et thermiquement isolante 24 insérée dans la face frontale du socle mobile 9.

Les inserts 21 situés aux extrémités des tiges de liaison 19 sont bloqués dans des cosses 25, elles-mêmes disposées dans un bloc isolant 26, au moyen de vis de blocage 27. Les cosses 25 sont reliées de façon conventionnelle à des câbles d'alimentation 28.

Afin d'éviter un échauffement trop important de la tête de soudage et de perforation, on prévoit avantageusement dans le support mobile 4 des conduits 29 reliés à une source de fluide de refroidissement.

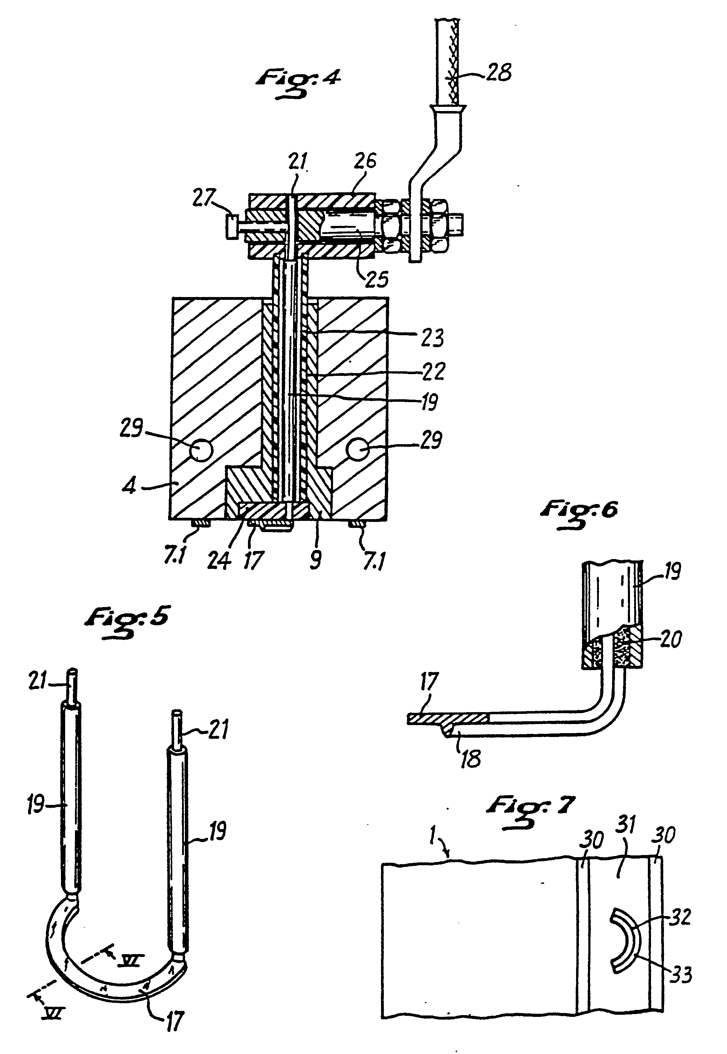

Le fonctionnement du dispositif selon l'invention est le suivant: le film 1 est avancé pas à pas entre le support mobile 4 et la contreplaque 6. Pour chaque arrêt du film, le support mobile est avancé vers le film et un courant est envoyé dans les rubans de soudage 7 et le ruban de perforation 17. Au niveau du ruban de perforation 17, les parties latérales du ruban 17 effectuent une soudure tandis que la nervure 18 passe à travers les deux épaisseurs du film. Lorsque le film 1 a avancé d'un pas après le soudage et la perforation, il est de nouveau pressé par le support mobile 4 au niveau des parties froides 7.2 des rubans de soudage 7. Lors de cette étape, les soudures encore chaudes sont maintenues aplaties tout en étant refroidies, de sorte qu'à la sortie du dispositif le film comporte deux soudures planes 30 (figure 7) encadrant une languette 31 dans laquelle est formée une fente curviligne 32 en anse de panier elle-même entourée d'une soudure 33. On constate donc que lorsque le film 1 va être soudé transversalement lors d'une étape ultérieure, la languette 31 va être entièrement bordée par des soudures et ne permettra pas l'accumulation d'éléments polluants lors des différentes manipulations.

Bien entendu, l'invention n'est pas limitée au mode de réalisation décrit ci-dessus et est susceptible de variantes de réalisation qui apparaîtront à l'homme de métier. En particulier, le ruban de perforation 17 peut être réalisé sous forme d'un anneau circulaire afin de réaliser une ouverture de même forme dans la languette, les tiges de liaison 19 étant alors soudées perpendiculairement à la face arrière de l'anneau circulaire.

On peut également prévoir de modifier à distance la position du socle mobile 9 afin d'éviter une intervention au niveau du dispositif de soudage et de perforation.

**Revendications**

1. Dispositif de soudage et de perforation d'un film thermoplastique (1) replié sur lui-même entraîné pas à pas, comportant un support (4) mobile transversalement au film (1) et des moyens chauffants portés par le support mobile (4), ces moyens chauffants comprenant deux rubans de soudage (7) conducteurs de l'électricité, espacés l'un de l'autre et comportant chacun une partie (7.1) chauffante par passage d'un courant électrique, et des moyens de perforation (8) disposés entre les rubans de soudage (7) caractérisé en ce que les rubans de soudage (7) comportent une partie non chauffante (7.2) de longueur au moins égale à la partie chauffante (7.1 ) et disposée en aval de la partie chauffante selon une direction de déplacement du film (1).

2. Dispositif de soudage et de perforation selon la revendication 1, caractérisé en ce que les moyens de perforation (8) sont montés sur un socle (9) qui est mobile parallèlement à une direction longitudinale des rubans de soudage (7).

3. Dispositif de soudage et de perforation selon la revendication 1, caractérisé en ce que les moyens de perforation comprennent un ruban de perforation (17) chauffant par passage d'un courant électrique et présentant une nervure longitudinale (18) tournée vers le film (1).

4. Dispositif de soudage et de perforation selon la revendication 3, caractérisé en ce que le ruban de perforation (17) comporte des extrémités repliées engagées dans une première extrémité de tiges de liaison tubulaires (19) et soudées à celle-ci, les tiges de liaison tubulaires (19) ayant une seconde extrémité équipée d'un insert soudé (21).

5. Dispositif de soudage et de perforation selon la revendication 1 caractérisé en ce que les moyens de perforation (8) sont profilés en C et sont disposés pour réaliser une fente en anse de panier.

**Patentansprüche**

1. Vorrichtung zum Schweißen und Perforieren einer schrittweise geförderten gefalteten thermoplastischen Folie, umfassend einen quer zur Folie (1) beweglichen Träger (4) und eine an dem beweglichen Träger (4) angeordnete Heizeinrichtung, die zwei voneinander beabstandete elektrisch leitfähige Schweißstreifen (7) umfaßt, die jeweils einen durch einen elektrischen Stromfluß heizenden Abschnitt (7.1) aufweisen, sowie eine zwischen den Schweißstreifen (7) angeordnete Perforationseinrichtung (8), dadurch gekennzeichnet, daß die Schweißstreifen (7) einen nicht heizenden Abschnitt (7.2) aufweisen, dessen Länge mindestens gleich der Länge des heizenden Abschnittes (7.1) ist und der bezüglich der Bewegungsrichtung der Folie (1) stromab des heizenden Abschnittes liegt.

2. Vorrichtung zum Schweißen und Perforieren gemäß Anspruch 1, dadurch gekennzeichnet, daß die Perforationseinrichtung (8) auf einem Sockel (9) befestigt ist, der parallel zu einer Längsrichtung der Schweißstreifen (7) beweglich ist.

3. Vorrichtung zum Schweißen und Perforieren gemäß Anspruch 1, dadurch gekennzeichnet, daß die Perforationseinrichtung einen durch elektrischen Stromfluß heizenden Perforationsstreifen (17) aufweist, der eine der Folie (1) zugekehrte Längsrippe (18) hat.

4. Vorrichtung zum Schweißen und Perforieren nach Anspruch 3, dadurch gekennzeichnet, daß der Perforationsstreifen (17) umgebogene Endabschnitte trägt, die jeweils in ein erstes Ende von rohrförmigen Verbindungsstäben (19) eingreifen und an diese angelötet sind, wobei die rohrförmigen Verbindungsstäbe (19) an ihrem jeweiligen zweiten Ende mit einem eingelöteten Einsatz (21) versehen sind.

5. Vorrichtung zum Schweißen und Perforieren nach Anspruch 1, dadurch gekennzeichnet, daß die Perforationseinrichtung (8) ein C-förmiges Profil hat und derart angeordnet ist, daß ein Spalt in Form eines Korbhenkels erzeugt wird.

**Claims**

1. A sealing and perforating device for a thermoplastic film (1) folded back on itself, driven step by step, comprising a support (4) movable in a direction transverse to the film (1), and heating means carried by the movable support (4), those heating means comprising two sealing strips (7) that conduct electricity, spaced from each other and each comprising a portion (7.1) heated by the passage of an electric current, and perforating means (8) located between the sealing strips (7), characterized in that the sealing strips (7) include a non-heating portion (7.2) the length of which is at least equal to the heating portion (7.1) and positioned downstream from the heating portion relative to the direction of movement of the film.

2. A sealing and perforating device according to claim 1, characterized in that the perforating means (8) is mounted on a base (9) that is movable in a direction parallel to a longitudinal direction of the sealing strips (7).

3. A sealing and perforating device according to claim 1, characterized in that the perforating means comprises a perforating strip (17) that is heated by the passage of an electric current, and that has a longitudinal rib (18) turned toward the film (1).

4. A sealing and perforating device according to claims 3, characterized in that the perforating strip (17) has folded back ends received in a first end of tubular connecting rods (19) having a second end equipped with a welded insert (21).

5. A sealing and perforating device according to claims 1, characterized in that the perforating means (8) is profiled in the form of a C and is positioned to create a slit in the shape of a basket handle.

*Fig.1*

*Fig. 2*

*Fig. 3*

Fig.4

28

27    21    26

29    29

4

7.1   24   17   9   7.1

Fig.6

19

20

17

18

Fig.5

21

21

19

19

19

VII

VII

17

Fig.7

1    30   31   30

32

33